# EUROPEAN PATENT SPECIFICATION

(11) **EP 3 094 190 B1**
(45) Date of publication and mention of the grant of the patent: **27.05.2026**
(21) Application number: 15700456.5
(22) Date of filing: 15.01.2015
(51) Int. Cl.: A23B 4/07

(54) **METHOD FOR THAWING A FOOD PRODUCT**
VERFAHREN ZUM AUFTAUEN EINES LEBENSMITTELS
MÉTHODE DE DÉCONGELEMENT D'UN PRODUIT ALIMENTAIRE

(30) Priority: 16.01.2014 EP 14151472; 10.09.2014 EP 14184256
(43) Date of publication of application: 23.11.2016
(73) Proprietor: GEA Food Solutions Bakel B.V., 5761 EN Bakel (NL)
(72) Inventor: STROLENBERG, Alex, NL - 5768RS Meijel (NL)
(74) Representative: Kutzenberger Wolff & Partner
(86) International application number: PCT/EP2015/050634
(87) International publication number: WO 2015/107100

(56) References cited:
- JP-A- H08 266 257
- US-A- 5 293 019
- US-A1- 2006 289 529
- US-A1- 2007 029 311
- US-A1- 2007 145 047
- US-A1- 2011 114 633
- US-A1- 2014 004 235
- US-A1- 2016 128 138
- DATABASE COMPENDEX [online] ENGINEERING INFORMATION, INC., NEW YORK, NY, US; 1999, TANAKA F ET AL: "Dielectric properties of shrimp related to microwave frequencies: From frozen to cooked stages", XP002736788, Database accession no. E2000235150217
- TANAKA F ET AL: "Dielectric properties of shrimp related to microwave frequencies: From frozen to cooked stages", JOURNAL OF FOOD PROCESS ENGINEERING 1999 FOOD & NUTRITION PRESS INC, vol. 22, no. 6, 1999, pages 455 - 468
- DATABASE COMPENDEX [online] ENGINEERING INFORMATION, INC., NEW YORK, NY, US; November 2009 (2009-11-01), UENO S ET AL: "Effect of the grain boundary of ice crystals in a frozen gelatin solution on the dielectric properties at a subzero temperature", XP002736789, Database accession no. E20100112606158
- UENO S ET AL: "Effect of the grain boundary of ice crystals in a frozen gelatin solution on the dielectric properties at a subzero temperature", BIOSCIENCE, BIOTECHNOLOGY AND BIOCHEMISTRY NOVEMBER 2009 JAPAN SOC. FOR BIOSCIENCE BIOTECHNOLOGY AND AGROCHEMISTRY JPN, vol. 73, no. 11, November 2009 (2009-11-01), pages 2478 - 2482, DOI: 10.1271/BBB.90474
- DATABASE COMPENDEX [online] ENGINEERING INFORMATION, INC., NEW YORK, NY, US; 2013, LYNG J G ET AL: "Effect of freezing rate and comminution on dielectric properties of pork", XP002736790, Database accession no. E20133916771386
- LYNG J G ET AL: "Effect of freezing rate and comminution on dielectric properties of pork", CZECH JOURNAL OF FOOD SCIENCES 2013 INSTITUTE OF AGRICULTURAL AND FOOD INFORMATION CZE, vol. 31, no. 5, 2013, pages 413 - 418

## Description

The present invention relates to a method for thawing a food product.

Such method is known from the state of the art, for example from:
- JP H08 266257 A,
- DATABASE COMPENDEX [Online]
   ENGINEERING INFORMATION, INC., NEW YORK, NY, US; 1999, TANAKA F ET AL: "Dielectric properties of shrimp related to microwave frequencies: From frozen to cooked stages",
   XP002736788, Database accession no. E2000235150217; & TANAKA F ET AL:
   "Dielectric properties of shrimp related to microwave frequencies: From frozen to cooked stages",
   JOURNAL OF FOOD PROCESS ENGINEERING 1999 FOOD & NUTRITION PRESS INC,
   vol. 22, no. 6, 1999, pages 455-468, [Abstract],
- DATABASE COMPENDEX [Online]
   ENGINEERING INFORMATION, INC., NEW YORK, NY, US; November 2009 (2009-11),
   UENO S ET AL: "Effect of the grain boundary of ice crystals in a frozen gelatin solution on the dielectric properties at a subzero temperature", XP002736789,
   Database accession no. E20100112606158 ; & UENO S ET AL: "Effect of the grain boundary of ice crystals in a frozen gelatin solution on the dielectric properties at a subzero temperature",
   BIOSCIENCE, BIOTECHNOLOGY AND BIOCHEMISTRY NOVEMBER 2009 JAPAN SOC. FOR BIOSCIENCE BIOTECHNOLOGY AND AGROCHEMISTRY JPN,
   vol. 73, no. 11, November 2009 (2009-11), pages 2478-2482,
   DOI: 10.1271/BBB.90474, [Abstract],
- DATABASE COMPENDEX [Online]
   ENGINEERING INFORMATION, INC., NEW YORK, NY, US; 2013,
   LYNG J G ET AL: "Effect of freezing rate and comminution on dielectric properties of pork",
   XP002736790,
   Database accession no. E20133916771386 ; & LYNG J G ET AL: "Effect of freezing rate and comminution on dielectric properties of pork",
   CZECH JOURNAL OF FOOD SCIENCES 2013 INSTITUTE OF AGRICULTURAL AND FOOD INFORMATION CZE,
   vol. 31, no. 5, 2013, pages 413-418, [Abstract],
- US 2016/0128138 A1,
- US 2007/0029311 A1,
- US 5,293,019 A,
- US2011/0114633 A1,
- US 2014/0004235 A1,
- US 2007/0145047 A1 and
- US 2006/0289529 A1.

An apparatus for defrosting food products such as meat is, for example, a so called tumbler or mixer and are e.g. built by the applicant of the present patent application. The product, particularly a food product, is supplied to the vessel in a frozen state, for example at a temperature of - 18°C, and is in most cases provided as large bocks comprising a multitude of individual chunks, which are subsequently defrosted. During the defrosting, the vessel preferably rotates and/or the product is moved inside the vessel for example by one or more baffles and/or paddles which preferably move relative to the vessel and/or the vessel moves relative to the baffles/paddles. The sidewalls of the vessel and/or the baffles and/or paddles are heated and/or steam is added to the vessel to defrost the product. A liquid, for example a brine, and/or a spice can be added to the product prior and/or during defrosting. During defrosting, the block falls apart into a multitude of smaller chunks. The thawing process consumes a lot of energy and in many cases the thawing process cannot be controlled adequately, which results in a waste of energy and/or time and/or in a reduced quality of the food product. The same is true for the freezing process.

It was therefore the problem of the present invention to provide a method which does not comprise the deficiencies according to the state of the art.

This problem is solved with a method according to claim 1.

The present invention relates to a method for thawing a food product. Food products are preferably protein containing products such as meat, fish or the like, but also vegetables or fruit. The thawing/defrosting process takes, for example, place in a defrosting apparatus. Such apparatus are, for example so called tumblers or mixers, and comprises a vessel. The vessel comprises a sidewall, a bottom and top. The bottom and/or the top can be designed as a lid. The center axis of the vessel is preferably inclined relative to a horizontal plane. The angle of inclination is preferably altered based on, for example on the product to be defrosted, the filling degree of the vessel and/or the condition under which the defrosting takes place. The food product preferably a meat product is supplied to the vessel in a frozen state, for example at a temperature of - 18°C, in most cases as large bocks, each preferably comprising a multitude of individual chunks, and is subsequently defrosted, i.e. heated, at least at its surface to a temperature > 0°C. During the defrosting, the vessel preferably rotates and/or the product is moved inside the vessel for example by one or more baffles and/or paddles which preferably move relative to the vessel and/or the vessel rotates relative to the baffles and/or paddles. The vessel, the baffles and/or paddles can be utilized to massage the product and/or to massage a liquid into the product. The sidewalls of the vessel and/or the baffles and/or paddles are preferably heated and/or steam is added to the vessel to defrost the product. Preferably, the vessel is operated under vacuum, i.e. a pressure less than ambient pressure. In case steam is added to the vessel, this preferably takes place intermittently. After each injection of steam, preferably, the vacuum is reestablished again. A liquid, for example a brine, and/or a spice can be added to the product before and/or during defrosting. During defrosting, each block preferably falls apart into a multitude of smaller chunks. As a final step of the defrosting process, the product is preferably cooled again after it has been thawed but not frozen again. After defrosting, the product and/or a liquid are removed from the vessel, transported to the next processing step and the vessel is refilled with frozen product and the defrosting restarts.

A measuring means, a sensor, is utilized to measure a dielectric property, particularly the dielectric constant, which is nowadays also called the permittivity or relative permittivity of the product, particularly the food product. Preferably the measurement is taken in a temperature range between -25° to +10° C and/or in a frequency range between 10⁶- 10¹² Hz and/or mm waves in the gigaHz to TerraHz range.

Preferably, the measurement is based upon low power electromagnetic sensing technology, by measuring absorption and/or reflection of a signal emitted by an electromagnetic source, particularly by microwave generator.

Preferably, the sensor comprises a solid state microwave generator, an antenna and a control device. The solid stat microwave generator emits a signal, i.e. radiation into the closed cavity of the defroster or freezer towards the product to be treated and the antenna receives the reflected signal. Based on the amount that has been absorbed and/or that has been reflected, the state of phase can be derived and hence the thawing or freezing energy can be controlled.

Preferably, the solid state microwave generator emits low-power signals.

More preferably, the microwave generator, particularly a solid state microwave generator, or an additional microwave generator, particularly a solid state microwave generator, also emits high power signals.

Due to the high power signals more energy for the thawing can be provided and/or hot spots can be avoided and the thawing time can be reduced by more than 50% compared to conventional thawing devices.

By measuring the dielectric constant, the microwave generator that emits the high power signal can be controlled effectively to provide maximum energy and hence reduce the thawing time but also to avoid overheating, i.e. cooking of the product.

Based on this measurement, the thawing process is controlled. A control device, a computer or the like, compares stored data with measured data and based on this comparison, the control device determines the progress of the thawing.

Particularly in the phase change range around 0°C the measurement of the permittivity or relative permittivity is much more sensitive than a temperature measurement, so that the process can be controlled much more accurately. This particularly avoids overheating of the product, which results in waste of energy and/or time and/or in a damage of the food product.

The means preferably measure the dielectric property of the product without contacting the product, i.e. means is located at least partially inside the vessel, but preferably above the filling level of the product and/or liquid inside the vessel. The means preferably never touch the product. The measurement preferably takes place during the entire process, i.e. from the beginning until the end. Preferably, means is mounted at the lid of the vessel. Preferably means remains stationary even if the vessel rotated.

The measurement can be executed continuously or intermittently.

Preferably vacuum is applied to the vessel at least temporarily during the defrosting process. Preferably, this vacuum is at least temporarily smaller than 50 mbar absolute inside the vessel. Preferably, the measurement means is also, at least partially subjected to the vacuum in the vessel.

Preferably the means comprise an electronic component, for example an integrated circuit, which is hermetically sealed from the atmosphere in the vessel. Particularly, the electronic component is not subjected to the same pressure level than the vessel.

The signal from the means is preferably transferred to a display and/or a PLC and/or is preferably utilized to control the defrosting process, at least to trigger an alarm, for example in case too much heat-energy is supplied to the vessel.

The reading of the sensor is preferably averaged over a certain period of time.

Preferably, the measurement is carried out in a temperature range of -25 - +10 °C. Preferably, based on the dielectric properties, the amount of energy, consumed by the product is measured and/or calculated. Due to this information, particularly the thawing process can be controlled very accurately, because the amount of energy needed to thaw a particular piece of product, for example meat is very well known.

During the thawing process, the product is first heated and then cooled again. More preferably, the change between the heating and the cooling phase is determined based on the dielectric properties. This prevents overheating of the product and a lot of energy and process time can be saved.

Preferably, no vacuum is applied during defrosting with microwave energy, i.e. the supply of microwave energy is utilized at ambient pressure.

According to the present invention steam is utilized to defrost the food product. Preferably, the steam and/or microwave-energy are utilized intermittently, preferably alternatively.

Preferably, the microwave energy is provided at a frequency range 800 - 1000 MHz. Preferably, the means to measure the dielectric properties is in direct contact with the product or the measurement of the dielectric properties are carried out without contact to the product.

Preferably, the thawing takes place at least temporarily in the presence of a brine. Preferably, the apparatus comprises means to heat and cool the product. Preferably steam can be injected into the apparatus.

Preferably, the apparatus rotates during heating and/or cooling of the product. More preferably, the apparatus is a cylinder whose axis of rotation can be inclined relative to a horizontal plane.

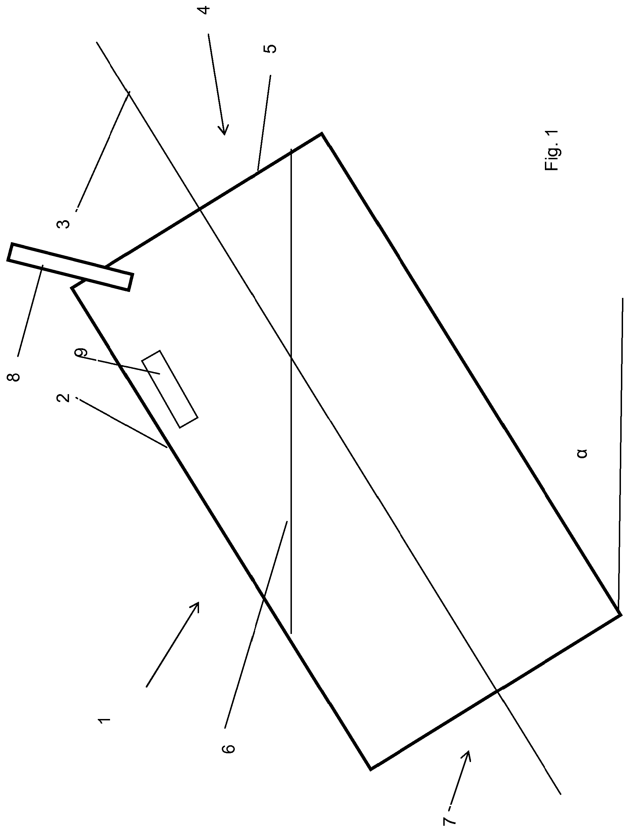

The invention is now explained according to Figure 1. These explanations do not limit the scope of protection..

Figure 1 shows the defrosting apparatus 1. This apparatus comprises a sidewall 2. here an essentially cylindrical sidewall, and is closed at the bottom 7 and at the top 4. At the top 4, the apparatus comprises here a lid 5, which can be opened and closed to fill and/or empty the vessel. As can be seen, the vessel is preferably inclined by an angle α relative to a horizontal plane. This angle α can be preferably varied. Preferably, the vessel 1, the top 4 and the bottom 7 rotate around an axis of rotation during the defrosting. The sidewall 2 may comprise heating means. Furthermore, the apparatus comprises measurement-means 8, here a sensor, which measures the dielectric constant of the food product to be thawed. The means 8 extends at least partially into the apparatus 1, here a vessel. The measurement-means 8 is preferably mounted to the apparatus such that it remains stationary even in case the apparatus rotates. As can also be seen, the measurement-means 8 is situated above the filling level 6 of the apparatus 1Thus the measurement-means 8 does not touch the product and/or a liquid that surrounds the product to be defrozen. The measurement-means comprise here a microwave generator, preferably a solid-state microwave generator, an antenna and a control device, that controls the microwave generator and/or receives data from the antenna and transfers the signal to a control unit, preferably a PLC that controls the energy supply to the vessel. Preferably the microwave generator emits low power magnetic microwaves.

The measurement-means 8 reads the dielectric constant of the product. This is preferably done by a comparison of the emitted microwave radiation and the radiation received by the antenna. From this data, the dielectric constant 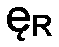 (epsilon R) is derived.

The εr is divined by measuring (calculating) the difference of the emitted microwave radiation and the reflected and absorbed amount of microwave radiation.

This signal is transferred to a control unit, for example a computer which compares the reading with stored data of dielectric constant for example versus temperature. This comparison provides information about the progress of the thawing process and thus allows to control the further addition of heat such, that the product is not overheated. Furthermore the change from heating to cooling can be changed based on the reading of means 8, because in most cases, the food product is cooled again after it has been thawed. The apparatus 1 preferably comprises baffles and/or paddles inside the apparatus 1 to stir the product during defrosting and/or to transfer heat to the product in case the baffles/paddles are heated. Furthermore, the sidewall, the bottom and/or the top can comprise heating means in order to transfer heat from the shell of the apparatus to the product. Preferably, the apparatus comprises steam injection means to inject steam into the apparatus 1in order to facilitate and/or improve the defrosting process. Preferably, vacuum is applied to the apparatus during defrosting, which means that the temperature-measurement-means 8 is also at least partially subjected to vacuum.

Preferably, an additional high power microwave generator 9, preferably a solid state microwave generator is provided in the vessel, that emits microwaves with a high power microwave radiation.

The high power microwave generator can be a separate generator and/or can be integrated into the generator of the means 8. The microwave generator 9 preferably remains in a position above the product even if the vessel rotates. The microwave generator 9 is controlled by the means 8 preferably such that it emits maximum energy without overheating the product locally.

In order to defrost the product, it is filled batch-wise, preferably as large blocks, which comprise a multitude of smaller chunks into the apparatus 1. Then, preferably under rotation of the apparatus, heat is added to apparatus by heating the shell of the apparatus and/or by injecting steam into apparatus. During the defrosting, preferably, a certain level of vacuum is maintained inside of the apparatus, particularly to avoid overheating of the surface of the product to be defrozen. The measurement-means 8 measures continuously or semi-continuously the dielectric constant of the product. Preferably, the addition of steam and/or the vacuum-level are controlled by the reading of the measurement-means 8. During the defrosting, the product blocks preferably fall apart into a multitude of smaller chunks.

The defrosting can also take place in a mixer. The above said applies likewise to the method.

## Claims

1. Method for thawing a food product, the method including the step of measuring a dielectric property of the food product, wherein the dielectric property is the dielectric constant of the food product,
**characterized by**
controlling the thawing process based on this measurement, wherein a control device compares stored data with measured data and based on this comparison, the control device determines the progress of the thawing, wherein steam is utilized to defrost the food product.

2. Method according to claim 1, **characterized in that** the measurement is executed continuously or intermittently.

3. Method according to one of the preceding claims, **characterized in that** the measurement is carried out in a temperature range of -5 - +5 °C.

4. Method according to one of the preceding claims, **characterized in that** amount of consumed energy is measured.

5. Method according to one of the preceding claims, **characterized in that** during thawing, the product is first heated and then cooled again, wherein the change between the heating and the cooling phase is determined based on the dielectric constant.

6. Method according to any of the preceding claims, **characterized in that** steam and/or microwave are utilized intermittently, preferably alternatively.

## Patentansprüche

1. Verfahren zum Auftauen eines Lebensmittels, wobei das Verfahren den Schritt des Messens einer dielektrischen Eigenschaft des Lebensmittels umfasst, wobei die dielektrische Eigenschaft die Dielektrizitätskonstante des Lebensmittels ist, **gekennzeichnet durch**
der Steuerung des Auftauvorgangs auf der Grundlage dieser Messung, wobei eine Steuervorrichtung gespeicherte Daten mit gemessenen Daten vergleicht und auf der Grundlage dieses Vergleichs den Fortschritt des Auftauens bestimmt, wobei Dampf zum Auftauen des Lebensmittels verwendet wird.

2. Verfahren nach Anspruch 1, **dadurch gekennzeichnet, dass** die Messung kontinuierlich oder intermittierend durchgeführt wird.

3. Verfahren nach einem der vorstehenden Ansprüche, **dadurch gekennzeichnet, dass** die Messung in einem Temperaturbereich von -5 bis +5 °C durchgeführt wird.

4. Verfahren nach einem der vorstehenden Ansprüche, **dadurch gekennzeichnet, dass** die verbrauchte Energiemenge gemessen wird.

5. Verfahren nach einem der vorstehenden Ansprüche, **dadurch gekennzeichnet, dass** das Produkt während des Auftauens zunächst erwärmt und anschließend wieder abgekühlt wird, wobei der Übergang zwischen der Erwärmungs- und der Abkühlungsphase anhand der Dielektrizitätskonstante bestimmt wird.

6. Verfahren nach einem der vorstehenden Ansprüche, **dadurch gekennzeichnet, dass** Dampf und/oder Mikrowellen intermittierend, vorzugsweise abwechselnd, eingesetzt werden.

## Revendications

1. Procédé de décongélation d'un produit alimentaire, le procédé comprenant l'étape consistant à mesurer une propriété diélectrique du produit alimentaire, dans lequel la propriété diélectrique est la constante diélectrique du produit alimentaire,
**caractérisé par**
le contrôle du processus de décongélation sur la base de cette mesure, dans lequel un dispositif de contrôle compare des données stockées avec des données mesurées et, sur la base de cette comparaison, le dispositif de contrôle détermine la progression de la décongélation, dans lequel de la vapeur est utilisée pour décongeler le produit alimentaire.

2. Procédé selon la revendication 1, **caractérisé en ce que** la mesure est effectuée en continu ou par intermittence.

3. Procédé selon l'une des revendications précédentes, **caractérisé en ce que** la mesure est effectuée dans une plage de température comprise entre -5 et +5 °C.

4. Procédé selon l'une des revendications précédentes, **caractérisé en ce que** la quantité d'énergie consommée est mesurée.

5. Procédé selon l'une des revendications précédentes, **caractérisé en ce que**, pendant la décongélation, le produit est d'abord chauffé puis refroidi à nouveau, le passage de la phase de chauffage à la phase de refroidissement étant déterminé sur la base de la constante diélectrique.

6. Procédé selon l'une quelconque des revendications précédentes, **caractérisé en ce que** de la vapeur et/ou des micro-ondes sont utilisées de manière intermittente, de préférence en alternance.
